# EUROPÄISCHE PATENTANMELDUNG

(11) **EP 4 802 870 A1**
(43) Veröffentlichungstag der Anmeldung: **09.09.2026**
(21) Anmeldenummer: 26161721.1
(22) Anmeldetag: 02.03.2026
(51) Int. Cl.: A01B 33/08, A01B 71/04, A01B 33/10

(54) **BODENBEARBEITUNGSWELLE UND LANDWIRTSCHAFTLICHE MASCHINE**

(30) Priorität: 04.03.2025 DE 202025101150 U
(71) Anmelder: Grimme Landmaschinenfabrik SE & Co. KG, 49104 Damme (DE)
(72) Erfinder: Sander, Malte, 49419 Wagenfeld (DE)
(74) Vertreter: Wischmeyer, André

(57) **Zusammenfassung**

Die vorliegende Erfindung betrifft eine Bodenbearbeitungswelle für eine landwirtschaftliche Maschine, wobei die Bodenbearbeitungswelle auf ihren voneinander weg gerichteten Stirnseiten jeweils einen Rahmenlagerbereich zur Lagerung der Bodenbearbeitungswelle an einem Maschinenrahmen der landwirtschaftlichen Maschine aufweist,
mit einem ersten Wellenteil sowie einem zweiten Wellenteil, wobei die insbesondere deckungsgleich Drehachsen aufweisenden Wellenteile umfangsseitig zur Bodenbearbeitung mit Bearbeitungswerkzeugen versehen sind und im Bereich ihrer zueinander gewandten Enden dergestalt ein Innenlager ausbilden, dass die Wellenteile relativ zueinander drehbar sind.

## Beschreibung

Die vorliegende Erfindung betrifft eine Bodenbearbeitungswelle für eine landwirtschaftliche Maschine, wobei die Bodenbearbeitungswelle mit Bearbeitungswerkzeugen versehen ist. Die Bodenbearbeitungswelle dreht sich um eine Drehachse und ist auf ihren voneinander weg gerichteten Stirnseiten jeweils mit einem Rahmenlagerbereich zur Lagerung der Bodenbearbeitungswelle an einem Maschinenrahmen der landwirtschaftlichen Maschine versehen.

Landwirtschaftliche Maschinen wie Bodenfräsen, Krautschläger oder Mulcher nutzen auf einer durchgehenden Bodenbearbeitungswelle angeordnete Arbeitswerkzeuge, um ihre Aufgaben zu verrichten. Diese Welle ist in der Regel außen gelagert und wird meist einseitig von außen angetrieben, z.B. über Seitengetriebe oder Riemenantriebe.

Bei größeren Arbeitsbreiten oder höheren Leistungsanforderungen im Betrieb der landwirtschaftlichen Maschine kann ein beidseitiger Antrieb der Bearbeitungswelle bzw. der Bodenbearbeitungswelle notwendig sein. Wenn der vorgelagerte mechanische Antriebsstrang nicht mit einem kostspieligen Differentialgetriebe ausgestattet ist, führt eine durchgehende Bodenbearbeitungswelle mit beidseitigem Antrieb aufgrund der formschlüssigen Verzahnung der Bauteile zu einem mechanisch geschlossenen System. Dieses System ist statisch nicht eindeutig bestimmt. Dies führt im Dauerbetrieb regelmäßig zu Überbestimmungen und Verspannungen. Dadurch kann eine gleichmäßige Lastverteilung auf beide Seiten nicht gewährleistet werden, was zur Überdimensionierung der Antriebskomponenten führt, um die notwendige Leistungsreserve bei ungleichmäßiger Lastverteilung sicherzustellen.

Es ist Aufgabe der vorliegenden Erfindung, die Überdimensionierung der Antriebskomponenten zu reduzieren.

Die Aufgabe wird gelöst durch einen Gegenstand gemäß Anspruch 1 sowie durch einen Gegenstand gemäß Anspruch 9. Vorteilhafte Ausgestaltungen dieser Gegenstände sind den Unteransprüchen sowie der nachfolgenden Beschreibung zu entnehmen.

Eine erfindungsgemäße Bodenbearbeitungswelle weist einen ersten insbesondere als ersten Hohlwellenteil ausgebildeten Wellenteil sowie einen zweiten insbesondere als zweiten Hohlwellenteil ausgebildeten Wellenteil auf. Hierbei umfasst die Bodenbearbeitungswelle auf ihren voneinander weg gerichteten Stirnseiten jeweils einen Rahmenlagerbereich zur Lagerung der Bodenbearbeitungswelle an einem Maschinenrahmen der landwirtschaftlichen Maschine, wobei die Wellenteile umfangseitig zu Bodenbearbeitung mit Bearbeitungswerkzeugen versehen sind und jeweils Drehachsen aufweisen, die insbesondere zueinander deckungsgleich sind. Im Bereich ihren zueinander gewandten Enden bilden die Wellenteile ein Innenlager aus dergestalt, dass die Wellenteile relativ zueinander und zwar um die Drehachsen bzw. die jeweilige Drehachse drehbar sind.

Dies führt erfindungsgemäß im eingebauten Zustand dazu, dass die auf die jeweiligen Wellenteile vom Anrieb übertragenden Drehmomente außerhalb derjenigen, die durch Lagerreibung des Innenlagers gegebenenfalls übertragen werden, nicht an den jeweils anderen Wellenteil übertragen werden. Etwaige Kräfte oder Kraftkomponenten, die senkrecht zur Drehachse anstehen und auf die Bodenbearbeitungswelle wirken, werden jedoch über das Innenlager hin zum anderen Wellenteil übertragen. Sie sind somit maschinenrahmenseitig auf beiden Seiten abfangbar.

Ein Innenlager liegt insbesondere dann vor, wenn das gemeinsame Lager der beiden Wellenteile, mittels derer diese drehbeweglich gegeneinander sind, in Längsrichtung der jeweiligen Drehachse betrachtet innerhalb eines äußeren Umfangs der Wellenteile angeordnet ist, wobei die Bearbeitungswerkzeuge nicht berücksichtigt werden, sofern sie auf einer insbesondere zylindrischen Mantelfläche der Bodenbearbeitungswelle angeordnet sind. In dem Bereich, in dem das Innenlager der Bodenbearbeitungswelle angeordnet ist, ist diese somit nicht an dem Maschinenrahmen lagerbar bzw. gelagert. Die beiden Halbwellen stützen sich durch das Innenlager gegenseitig, sodass keine mittlere, äußere Abstützung notwendig ist. Durch die Teilung der Welle aufgrund des insbesondere mittig angeordneten Innenlagers sowie den dadurch geschaffenen Freiheitsgrad wird der Antriebsstrang eindeutig bestimmt. Hierdurch entfällt die Notwendigkeit eines Differentialgetriebes und die mechanischen Antriebskomponenten können bedarfsgerecht ausgelegt werden. Insbesondere bauen etwaige Seitengetriebe kleiner, wodurch die Bodenbearbeitungswelle mit Blick auf eine maximale Straßenfahrbreite größer bauen kann.

Vorzugsweise weisen die beiden Wellenteile an ihren zueinander gerichteten Enden jeweils zumindest zwei Stirnflächen auf, die über komplementäre Versprünge zueinander versetzt sind, dergestalt, dass ein verspringender Dichtungsspalt ausgebildet wird. Komplementär bedeutet in diesem Fall, dass auf beiden Stirnflächen Versprünge vorhanden sind, die dergestalt parallel laufen, dass ein Dichtungsspalt verspringt und somit keine Berührung der aneinander entlang drehbaren Stirnflächen vorhanden ist. Die Stirnflächen sind mit Flächensenkrechten versehen, die zumindest zur Drehachse parallele Komponenten aufweisen oder die vollständig parallel zueinander ausgebildet sind. Durch den versprechenden Dichtungsspalt wird eine Verschmutzung der innenliegenden Bereiche der Bodenbearbeitungswelle zumindest reduziert.

Es versteht sich, dass das Innenlager alternativ oder ergänzend gegenüber Außen durch zumindest eine Dichtung, die eine Relativbewegung der Wellenteile zueinander zulassen, abgedichtet ist. Beispielsweise kann ein geschäumter Elastomer-Dichtring das Eindringen feiner Schmutzpartikel verhindern, während ein zusätzlicher Wellendichtring das Eindringen kleinster Schmutzpartikel sowie von Flüssigkeiten verhindern kann.

Vorzugsweise ist einer der Wellenteile mit einem Wellenzapfen versehen bzw. weist einen Wellenzapfen auf, der zur Ausbildung des Innenlagers in einer Wellenaufnahme des anderen Wellenteils gelagert ist. Der auch als Lagerzapfen zu bezeichnende Wellenzapfen ist drehbar in der Wellenaufnahme gelagert. Der Wellenzapfen erstreckt sich in Richtung der Drehachsen und weist auf seiner Mantelseite Lagerflächen auf. Somit werden etwaige Orthogonalkräfte optimal aufgefangen und weitergeleitet.

Vorzugsweise weist die Bodenbearbeitungswelle ausgehend vom Wellenzapfen in radialer Richtung, bezüglich der Drehachsen, außenseitig wenigstens ein Bearbeitungswerkzeug auf, d. h. der Wellenzapfen erstreckt sich in einem Bereich, in dem auch direkt außenseitig durch das oder die Bearbeitungswerkzeuge Orthogonalkräfte auf die Bodenbearbeitungsvorrichtung auftreten. Diese werden im Innenlager aufgefangen und entsprechend weitergeleitet.

Insbesondere wird der eine Wellenteil durch eine Kombination aus zwei Wälzlagern, die einerseits als Festlager und andererseits als Loslager ausgebildet sind, gelagert. Vorzugsweise ist auf dem Wellenzapfen vorne zumindest ein Kugellager und hinten ein Tonnenlager angeordnet. Vorne meint hierbei zum Zapfenende hin, hinten meint hierbei zum weiteren Rest desselben Wellenteils hin. Insbesondere das hinten angeordnete Tonnenlager dient dem auffangen der orthogonalen Kräfte. Das Kugellager ist weiter von den Bearbeitungswerkzeugen des den Wellenzapfen aufweisenden Wellenteils entfernt als das Tonnenlager und kann insbesondere als Schrägkugellager, das axiale Kräfte übertragen kann, ausgeführt sein. Sowohl das Kugellager als auch das Tonnenlager verlaufen konzentrisch zur Drehachse der Bodenbearbeitungswelle, bzw. zu den Drehachsen der Wellenteile.

Gemäß einer weiteren vorteilhaften Ausbildung der Erfindung ist der Wellenzapfen Teil eines als Wellenzapfeneinsatz ausgebildeten Welleneinsatzes, der mit dem Rest des zugehörigen Wellenteils fest verbunden ist. Vorzugsweise erfolgt die Verbindung über einen Presssitz und/oder mittels einer Schweißverbindung. Als Welleneinsatz wird hierbei ein Teil der Bodenbearbeitungswelle bezeichnet, der zumindest teilweise in einen weiteren Teil der Bodenbearbeitungswelle eingesetzt wird. Insbesondere bedeutet dies, dass ein Teil der Bodenbearbeitungswelle als Hohlwelle bzw. zumindest hohlzylindrisch oder mit einer entsprechenden Ausnehmung zur Aufnahme eines solchen Einsatzes verbunden ist. Insbesondere kann hierdurch auf bisher gefertigte Hohlwellen zurückgegriffen werden, die üblicherweise außenseitig mit Bearbeitungswerkzeugen versehen sind. Eine Verschweißung des Welleneinsatzes bzw. alternativ oder ergänzend ein Presssitz sorgt hierbei für entsprechend feste Anordnung des Welleneinsatzes. Insbesondere kann der Welleneinsatz über zwei Passungen verfügen, die im montierten Zustand ein Hohlraum zwischen sich ausbilden, sodass einerseits eine definierte Lage und andererseits eine einfache Montage möglich ist.

Vorzugsweise ist die Wellenaufnahme Teil eines als Wellenaufnahmeeinsatz ausgebildeten Welleneinsatzes. Dieser Welleneinsatz kann wie vorbeschrieben auch der Wellenzapfeneinsatz mit dem Rest des zugehörigen Wellenteils vorzugsweise über ein Presssitz und/oder über eine Verschweißung verbunden sein. Insbesondere die Verwendung zweier Welleneinsätze, einerseits als Wellenaufnahmeeinsatz, andererseits als Wellenzapfeneinsatz führt dazu, dass für die weiteren Teile der jeweiligen Wellenteile ein Gleichteileansatz umgesetzt werden kann.

Dies gilt ebenfalls, wenn zumindest einer der Welleneinsätze in einer Adapterhülse des Wellenteils festgelegt ist. Insbesondere gilt dies, wenn beide Welleneinsätze, jeweils in einer Adapterhülse festgelegt sind. Solche Adapterhülsen können ergänzend auch auf der zum Maschinenrahmen und dem dortigen Lager gerichteten Seite der Bodenbearbeitungswelle verwendet werden, sodass für die überwiegenden Teile der Längserstreckung der jeweiligen Wellenteile hohlzylindrische Teile mit identischer Ausbildung einsetzbar sind. Ein Wellenteil ist dann an beiden stirnseitigen Enden mit Adapterhülsen ausgeführt.

Vorzugsweise weist ein Wellenteil somit den auf der Innenlagerseite befindlichen Welleneinsatz (Wellenzapfeneinsatz oder Wellenaufnahmeeinsatz) auf, jeweils eine Adapterhülse und einen Zentralkörper sowie ggf. auch eine zweite Adapterhülse am maschinenrahmenseitigen Ende des bspw. als Hohlzylinder mit Bearbeitungswerkzeugen ausgebildeten Zentralkörpers.

Auch auf den Adapterhülsen können außenseitig Bearbeitungswerkzeuge angeordnet sein. Ebenfalls können die Adapterhülsen mit dem Zentralkörper verschweißt sein.

Vorzugsweise sind die beiden Wellenteile als Halbwellen der Bodenbearbeitungswelle ausgebildet, d.h. die beiden Wellenteile weisen eine Länge auf, die sich insbesondere um nicht mehr als zehn Prozent voneinander unterscheidet.

Die eingangs gestellte Aufgabe wird ebenfalls durch eine landwirtschaftliche Maschine gelöst, die einen Maschinenrahmen aufweist, an dem eine vor- oder nachbeschriebene, erfindungsgemäße Bodenbearbeitungswelle angeordnet ist. In dieser landwirtschaftlichen Maschine kommen dieselben Vorteile vor, insbesondere weist eine solche landwirtschaftliche Maschine zwei Antriebe auf, die jeweils mit einem der beiden Wellenteile der Bodenbearbeitungswelle antriebsmäßig verbunden sind. Die Antriebskomponenten können somit gezielter dimensioniert werden, ein Differentialgetriebe kann entfallen. Der Antriebsstrang ist eindeutig bestimmt.

Weitere Vorteile und Einzelheiten der Erfindung sind der nachfolgenden Figurenbeschreibung zu entnehmen. Schematisch dargestellt zeigt
- Fig.1: einen erfindungsgemäßen Gegenstand in einer perspektivischen Darstellung,
- Fig. 2: einen weiteren erfindungsgemäßen Gegenstand in einer Seitenansicht,
- Fig.3: den Gegenstand nach Fig. 2 in dem Schnitt A-A,
- Fig. 4: einen weiteren erfindungsgemäßen Gegenstand,
- Fig. 5: den Gegenstand nach Fig. 4 in einem Schnitt A-A,

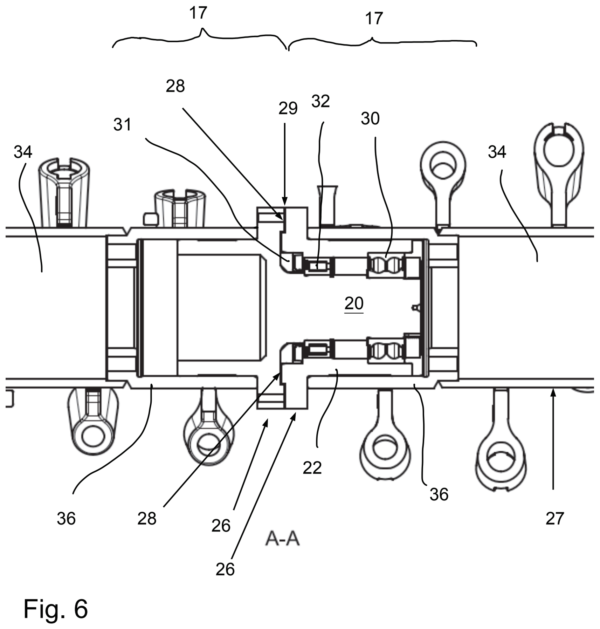

- Fig. 6: eine Detailansicht des Gegenstands nach Fig. 4.

Einzelne technische Merkmale der nachbeschriebenen Ausführungsbeispiele können auch in Kombination mit vorbeschriebenen Ausführungsbeispielen sowie den Merkmalen eines der unabhängigen Ansprüche und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

Eine landwirtschaftliche Maschine 2 ist vorliegend als Bodenfräse ausgebildet. Alternativ kann die Erfindung auch als Krautschläger oder Mulcher ausgebildet sein.

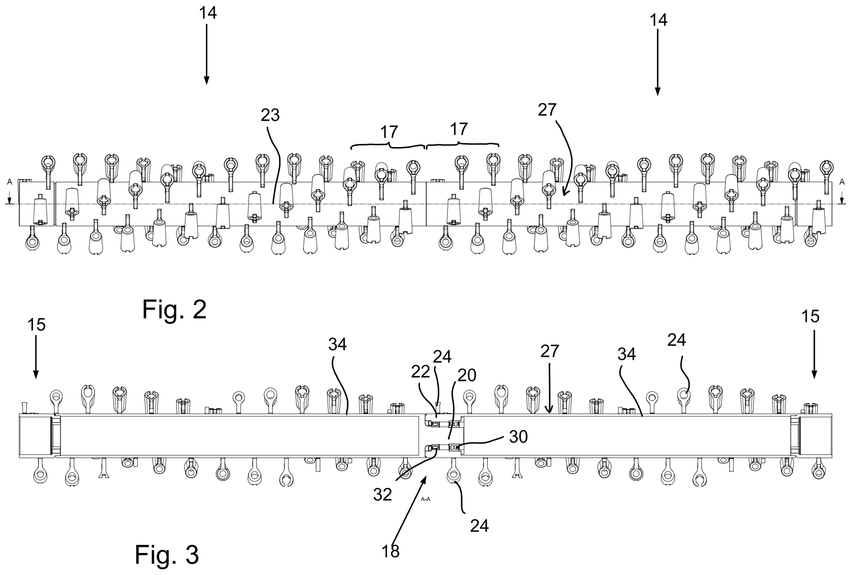

An einem Maschinenrahmen 4 ist eine Bodenbearbeitungswelle 6 in Form einer Fräswelle angeordnet, die an ihren voneinander weg gerichteten Enden an den Seiten 8 des Maschinenrahmens 4 gelagert ist. An diesen Seiten 8 sind jeweils über ein Verteilergetriebe 10 angetriebene Seitengetriebe 12 angeordnet, die Wellenteile 14 in Form von Halbwellen der Bodenbearbeitungswelle 6 antreiben (vgl. Fig. 2ff). Die Maschine 2 weist somit zwei Antriebe für die Bodenbearbeitungswelle 6 auf, die jeweils mit einem Wellenteil 14 verbunden sind. Der Antrieb der zum Verteilergetriebe führenden Antriebswelle 16 erfolgt über den Anschluss der Welle an die (nicht dargestellte) Zapfwelle eines Schleppers. Auf ihren voneinander weg gerichteten Stirnseiten 15 weisen die Wellenteile 14 jeweils einen Rahmenlagerbereich zur Lagerung der Bodenbearbeitungswelle 6 an einem Maschinenrahmen der landwirtschaftlichen Maschine auf.

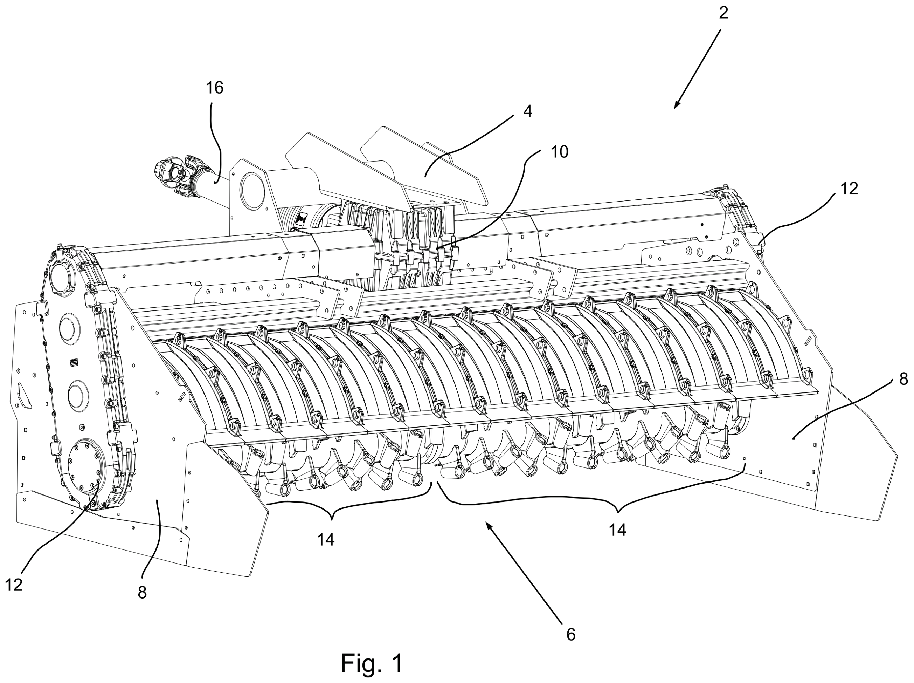

Durch die Unterteilung der in der Fig. 1 abgebildeten Bodenbearbeitungswelle 6 in zwei ineinander bzw. aneinander gelagerte Wellenteile gemäß einer der nachfolgend beschriebenen Ausführungsbeispiele können die Seitengetriebe 12 kleiner dimensioniert werden. Gleiches gilt für das Verteilergetriebe 10. Die notwendige Leistung wird besser verteilt.

Die beiden Wellenteile 14 der zweigeteilten Bodenbearbeitungswelle 6 sind an ihren zueinander gewandten, stirnseitigen Enden 17 über ein Innenlager 18 aneinander gelagert. Bei den Ausführungsbeispielen der Fig. 2ff umfasst jeweils einer der Wellenteile 14 einen Wellenzapfen 20, der in einer Wellenaufnahme 22 gelagert ist. Der Wellenzapfen 20 des einen Wellenteils 14 ragt so weit in den anderen Wellenteil 14 hinein, dass in radialer Richtung vom Wellenzapfen 20 ausgehend Bodenbearbeitungswerkzeuge 24 angeordnet sind.

Der Wellen- bzw. Lagerzapfen 20 und die Wellenaufnahme 22 und damit das Innenlager 18 sind bis auf flanschartige Fortsätze 26, die zueinander hingerichtete Stirnflächen 28 aufweisen, innerhalb einer Außenoberfläche 27, die mit Bearbeitungswerkzeugen 24 versehen sind, angeordnet. Sie bilden gemeinsam das Innenlager 18 mit aus. Die zueinander hingerichteten Stirnflächen 28 bilden zwischen sich einen Dichtungsspalt 29 auf, der zur verbesserten Dichtung mittels der verspringenden Stirnflächen 28 gewinkelt ist und somit verbessert abdichtet.

In Richtung des Innenlagers 18 hin wird der Innenraum zusätzlich über Dichtungen 31 abgedichtet. Anstelle der für das Bodenfräsen vorgesehenen Bearbeitungswerkzeuge 24 kann die sich um eine jeweilige Drehachse 23 drehende Bodenbearbeitungswelle 6 auch Schlegel oder Werkzeuge zum Mulchen aufweisen. Die Drehachse 23 der Bodenbearbeitungswelle entspricht den Drehachsen der Wellenteile 14.

Zum vorderen Ende eines Wellenzapfen 20 hin ist ein Kugellager 30, vorliegend als 2-reihiges Schrägkugellager ausgebildet, angeordnet. Zum hinteren Ende hin ist auf dem Wellenzapfen 20 ein Tonnenlager 32 zur verbesserten Aufnahme dort zu übertragender Orthogonalkräfte vorhanden. Zusätzlich ist dort der Durchmesser des Wellenzapfens 20 größer als an seinem vorderen Ende im Bereich des Kugellagers 30.

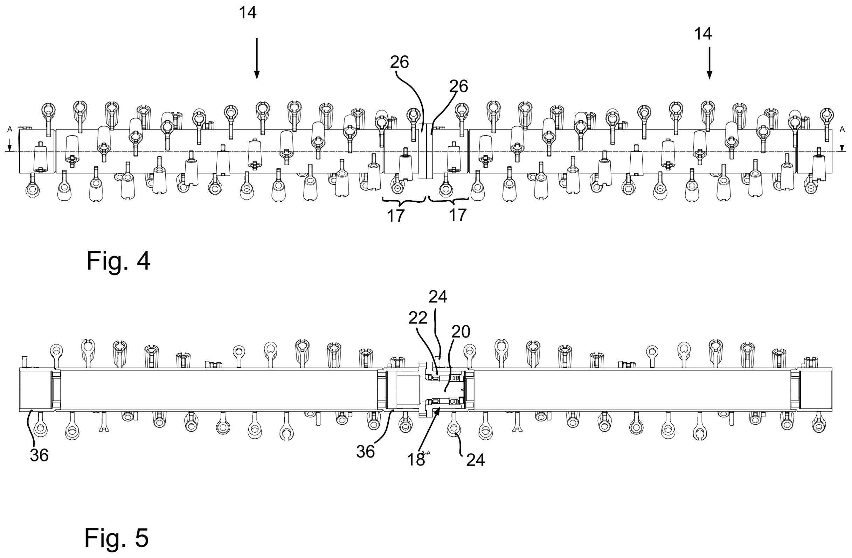

Beide Wellenteile 14 weisen einen längsgestreckten hohlzylindrischen Zentralkörper 34 auf, an dem die überwiegende Zahl der Bearbeitungswerkzeuge 24 auf dessen Mantelfläche bzw. Außenoberfläche 27 angeordnet ist. Im Ausführungsbeispiel nach der Figur 5 sind die Wellenaufnahme wie auch der Wellenzapfen 20 einstückig mit diesem Zentralkörper 34 ausgebildet (Fig. 3).

Im Ausführungsbeispiel der Figuren 4 und 5 sind die Wellenaufnahme wie auch der Wellenzapfen zunächst als separate Welleneinsätze und Montageteile, die in eine Adapterhülse 36 eines jeweiligen Wellenteils 14 aufgenommen werden, ausgebildet. Auf diese Weise kann ein der Zentralkörper 34 unabhängig von dem jeweiligen Welleneinsatz gefertigt werden, was für eine Fertigung eines erhöhte Anzahl von Gleichteilen bedeutet. Der als Wellenzapfeneinsatz und der als Wellenaufnahme ausgebildete Wellenaufnahmeeinsatz sind über einen Presssitz in der jeweiligen Adapterhülse 36 festgelegt.

Je nach Ausführungsbeispiel können auch an den in der Figur 5 linken und rechten Enden der Bodenbearbeitungswelle 6 Adapterhülsen 36 angeordnet sein, die dort für die Lagerung der Bodenbearbeitungswelle 6 am Maschinenrahmen 4 vorgesehen sind.

Anstelle einer Anordnung der Welleneinsätze in den Adapterhülsen 36 können ein Welleneinsatz oder auch beide Welleneinsätze in weiteren Ausführungsbeispielen auch direkt im Zentralkörper 34 festgelegt sein.

## Patentansprüche

1. Bodenbearbeitungswelle für eine landwirtschaftliche Maschine (2), wobei die Bodenbearbeitungswelle (6) auf ihren voneinander weg gerichteten Stirnseiten jeweils einen Rahmenlagerbereich (15) zur Lagerung der Bodenbearbeitungswelle (6) an einem Maschinenrahmen (4) der landwirtschaftlichen Maschine (2) aufweist, mit einem ersten Wellenteil (14) sowie einem zweiten Wellenteil (14), wobei die insbesondere deckungsgleich Drehachsen aufweisenden Wellenteile (14) umfangsseitig zur Bodenbearbeitung mit Bearbeitungswerkzeugen (24) versehen sind und im Bereich ihrer zueinander gewandten Enden (17) dergestalt ein Innenlager (18) ausbilden, dass die Wellenteile (14) relativ zueinander drehbar sind.

2. Bodenbearbeitungswelle nach Anspruch 1, **dadurch gekennzeichnet, dass** die beiden Wellenteile (14) an ihren zueinander gerichteten Enden (17) jeweils zumindest zwei Stirnflächen (28) aufweisen, die über komplementäre Versprünge zueinander versetzt sind, dergestalt, dass ein verspringender Dichtungsspalt (29) ausgebildet wird.

3. Bodenbearbeitungswelle nach Anspruch 1 oder 2, **dadurch gekennzeichnet, dass** einer der Wellenteile (14) einen Wellenzapfen (20) aufweist, der zur Ausbildung des Innenlagers (18) in einer Wellenaufnahme (22) des anderen Wellenteils (14) gelagert ist.

4. Bodenbearbeitungswelle nach Anspruch 3, **dadurch gekennzeichnet, dass** ausgehend vom Wellenzapfen (14) in radialer Richtung außenseitig wenigstens ein Bearbeitungswerkzeug (24) angeordnet ist.

5. Bodenbearbeitungswelle nach Anspruch 3 oder **4, dadurch gekennzeichnet, dass** auf dem Wellenzapfen (20) vorne zumindest ein Kugellager (30) und hinten ein Tonnenlager (32) angeordnet ist.

6. Bodenbearbeitungswelle nach einem der Ansprüche 3 bis 5, **dadurch gekennzeichnet, dass** der Wellenzapfen (20) Teil eines als Lagerzapfeneinsatz ausgebildeten Welleneinsatzes ist, der mit dem Rest des zugehörigen Wellenteils (14) vorzugsweise über einen Presssitz und/oder verschweißt verbunden ist.

7. Bodenbearbeitungswelle nach einem der Ansprüche 3 bis 6, **dadurch gekennzeichnet, dass** die Wellenaufnahme Teil eines als Wellenaufnahmeeinsatz ausgebildetes Welleneinsatzes ist, der mit dem Rest des zugehörigen Wellenteils (14) vorzugsweise über einen Presssitz und/oder verschweißt verbunden ist.

8. Bodenbearbeitungswelle nach einem der vorherigen Ansprüche 3 bis 7, **dadurch gekennzeichnet, dass** zumindest einer der Welleneinsätze in einer Adapterhülse (36) des Wellenteils (14) festgelegt ist.

9. Bodenbearbeitungswelle nach einem der vorherigen Ansprüche, **dadurch gekennzeichnet, dass** die Wellenteile (14) Halbwellen ausbilden.

10. Landwirtschaftliche Maschine mit einem Maschinenrahmen, an dem eine Bodenbearbeitungswelle (6) nach einem der vorherigen Ansprüchen gelagert ist.

11. Landwirtschaftliche Maschine nach Anspruch 10, **gekennzeichnet durch** zwei Antriebe, die jeweils mit einem Wellenteil (14) antriebsmäßig verbunden sind.
